# EUROPÄISCHE PATENTSCHRIFT

(11) **EP 3 222 009 B1**
(45) Veröffentlichungstag und Bekanntmachung des Hinweises auf die Patenterteilung: **24.06.2020**
(21) Anmeldenummer: 15790872.4
(22) Anmeldetag: 28.10.2015
(51) Int. Cl.: H04L 12/40, H04L 25/02

(54) **TEILNEHMERSTATION FÜR EIN BUSSYSTEM UND EIN VERFAHREN ZUM REGELN EINES TIMINGS EINES SENDESIGNALS FÜR EIN BUSSYSTEM**
SUBSCRIBER STATION FOR A BUS SYSTEM, AND METHOD FOR ADJUSTING THE TIMING OF A TRANSMIT SIGNAL FOR A BUS SYSTEM
STATION D'ABONNÉ POUR UN SYSTÈME DE BUS ET PROCÉDÉ SERVANT À RÉGLER UNE SYNCHRONISATION D'UN SIGNAL D'ÉMISSION POUR UN SYSTÈME DE BUS

(30) Priorität: 21.11.2014 DE 102014223838
(43) Veröffentlichungstag der Anmeldung: 27.09.2017
(73) Patentinhaber: Robert Bosch GmbH, 70442 Stuttgart (DE)
(72) Erfinder: WALKER, Steffen, 72770 Reutlingen (DE); HEHEMANN, Ingo, 49170 Hagen A.T.W (DE)
(86) Internationale Anmeldenummer: PCT/EP2015/074998
(87) Internationale Veröffentlichungsnummer: WO 2016/078884

(56) Entgegenhaltungen:
- EP-A1- 1 335 520
- EP-A1- 1 376 962
- EP-A1- 2 816 766
- WO-A1-2011/057023
- DE-T2- 60 317 701

## Beschreibung

### Technisches Gebiet

Die vorliegende Erfindung betrifft eine Teilnehmerstation für ein Bussystem und ein Verfahren zum Regeln eines Timings eines Sendesignals für ein Bussystem, um die Anforderungen in Bezug auf das Tastverhältnis (duty cycle) zu erfüllen.

### Stand der Technik

### Offenbarung der Erfindung

Ein Local Interconnect Network (LIN), das auch als LIN-Bus bekannt ist, wird beispielsweise in einem Fahrzeug zur kostengünstigen Kommunikation zwischen intelligenten Sensoren und Aktoren insbesondere in einer Fahrzeugtür oder einem Fahrzeugsitz verwendet. Der LIN-Bus basiert auf einem Eindraht-Bus und ist als serielles Kommunikationssystem spezifiziert. Der LIN-Bus ist den Feldbussen zugeordnet und wird oft mit einem CAN-Bus kombiniert. Über einen LIN-Master können LIN-Slaves auch von dem CAN-Bus bzw. CAN-Bussystem erreichbar sein. Beim CAN-Bussystem werden Nachrichten mittels des CAN-Protokolls übertragen, wie es in der CAN-Spezifikation in der ISO11898 beschrieben ist.

EP 1 376 962 A1 zeigt für ein Controller Area Network (CAN) einen Transceiver, welcher ein Bussignal optimiert, das auf zwei verschiedenen Busleitungen übertragen wird, nämlich auf einer Leitung für ein Signal CAN_H und auf einer Leitung für ein Signal CAN_L. Hierbei werden die Flanken der Signale auf den beiden Leitungen zeitlich derart aufeinander abgestimmt, dass Schaltflanken der Signale CAN_H, CAN_L auf den beiden Leitungen zu der gleichen Zeit anfangen.

Die Anforderungen an eine LIN-Sende-/Empfangseinrichtung, die auch LIN-Transceiver genannt wird, sind,
- Einhaltung der funktionalen Parameter, wie ausreichendes Timing der Flanken und Periodizität,
- Emission,
- Direct Power Injection (DPI), was ein Verfahren zur Störfestigkeitsmessung im Bereich der elektromagnetischen Verträglichkeit (EMV) gemäß der Norm IEC 62132-4 ist, und
- Elektrostatische Entladung (ESD = Electrostatic Discharge).

Bei der Zertifizierung von LIN-Transceivern treten häufig Verletzungen der Timing-Anforderungen an das Sendesignal auf, weil die Designparameter zu sehr auf die oben genannten Anforderungen in Bezug auf EMV und ESD zugeschnitten werden. Aktuell ist es erforderlich, sich über aufwändige und teure Redesigns des LIN-Transceivers schrittweise an die Erfüllung aller Anforderungen heranzutasten. Teilweise werden im Serienstand nicht alle an den LIN-Transceiver gestellten Forderungen erfüllt, was zur Unzufriedenheit auf Seiten des Nutzers des LIN-Transceivers bzw. der LIN-Teilnehmerstation und damit des LIN-Bussystems führt.

Daher ist es Aufgabe der vorliegenden Erfindung, eine Teilnehmerstation für ein Bussystem und ein Verfahren zum Regeln eines Timings eines Sendesignals für ein Bussystem bereitzustellen, welche die zuvor genannten Probleme lösen. Insbesondere sollen eine Teilnehmerstation für ein Bussystem und ein Verfahren zum Regeln eines Timings eines Sendesignals für ein Bussystem bereitgestellt werden, bei welchen aufwändige Redesignschritte zur Erfüllung sowohl der Anforderungen in Bezug auf EMV und ESD als auch der Anforderungen in Bezug auf das Timing von Flanken des Bussystems entfallen, so dass die genannten Anforderungen auf einfache und kostengünstige Weise eingehalten werden können.

Die Aufgabe wird durch eine Teilnehmerstation für ein Bussystem mit den Merkmalen des Anspruchs 1 gelöst. Die Teilnehmerstation umfasst eine Erfassungseinheit zur Erfassung einer Bitbreite von empfangenen Bits einer über einen Bus des Bussystems gesendeten Nachricht, und eine Regeleinheit zur Ermittlung der Bitbreite von mindestens einem Bit einer zu sendenden Nachricht, um die Bussystem-Anforderungen an das Tastverhältnis zu erfüllen und um die Bitbreite durch Verzögerung der Flanken eines der Nachricht entsprechenden Sendesignals auf der Grundlage der von der Erfassungseinheit erfassten Bitbreite zu regeln, wie in Anspruch 1 beschrieben.

Mit der Teilnehmerstation sind keine aufwändigen Redesignschritte mehr erforderlich, um sowohl die Anforderungen in Bezug auf EMV und ESD als auch die Anforderungen in Bezug auf das Timing von Flanken des Bussystems zu erfüllen. Dadurch können Entwicklungskosten auf dem Weg zur Erfüllung der Anforderungen eingespart werden, so dass die genannten Anforderungen auf einfache und kostengünstige Weise eingehalten werden können.

Mit der Teilnehmerstation ist es möglich, im Sendebetrieb ein ideales Duty-Cycle zu realisieren.

Ein weiterer Vorteil besteht darin, dass sich die Teilnehmerstation mit dem von ihr durchgeführten Verfahren an die jeweiligen Anwendungsbedingungen anpasst, die unterschiedliche Busparameter zu Folge haben. Dies ist vor allem für Originalteilhersteller (OEM = Original Equipment Manufacturer), wie beispielsweise im Bereich des Fahrzeugbaus, ein großer Vorteil.

Noch dazu eliminiert die Teilnehmerstation mit dem von ihr durchgeführten Verfahren die Abhängigkeit von den Toleranzen des Halbleiterprozesses.

Vorteilhaft ist auch, dass die Teilnehmerstation mit dem von ihr durchgeführten Verfahren die Abhängigkeit von den Umgebungsbedingungen, wie Variation der Versorgungsspannung und der Temperatur, eliminiert. Damit können bei den elektrischen Eigenschaften (Electrical Characteristics) engere Toleranzen eingehalten werden.

Vorteilhafte weitere Ausgestaltungen der Teilnehmerstation sind in den abhängigen Ansprüchen beschrieben.

Vorzugsweise umfasst die Teilnehmerstation zudem eine Sende-/Empfangseinrichtung zum Senden und/oder Empfangen von Nachrichten, wobei die Erfassungseinheit ausgestaltet ist, die Bitbreite zu erfassen, während die Sende-/Empfangseinrichtung Nachrichten sendet.

Möglicherweise ist die Erfassungseinheit zur Erfassung der Bitbreite von rezessiven und/oder dominanten Bits von über den Bus gesendeten Nachrichten ausgestaltet. Da die Bitbreite von rezessiven und dominanten Bits auf dem Bus des Bussystems in der Regel unterschiedlich ist, können bei erfassen beider Bitbreiten auch die Grenzwerte für beide Bitbreiten durch eine entsprechende Regelung der Regeleinheit eingehalten werden.

Vorteilhaft ist die Erfassungseinheit zur Erfassung der Bitbreite während eines Synchronisationsfelds der Nachricht ausgestaltet, wobei die Regeleinheit zur Regelung der Bitbreite für eine anstehende zu sendende Nachricht ausgestaltet ist. Hier kann durch den dauernden Zustandswechsel von direkt aufeinanderfolgenden Bits die Bitbreite für rezessive und dominante Bits schnell und zuverlässig erfasst werden.

Das Bussystem kann ein LIN-Bussystem sein, und die Regeleinheit kann den Wert für die Verzögerung der Flanken der zu sendenden Nachricht solange beibehalten, bis in einer empfangenen Nachricht das nächste Synchronisationsfeld ansteht. Somit kann das Sendesignal für die zu sendende Nachricht immer an die aktuell vorherrschenden Bedingungen angepasst werden.

Die Teilnehmerstation kann zum Senden und/oder Empfangen von Nachrichten gemäß dem LIN-Standard ausgestaltet sein.

Es ist auch denkbar, dass die Teilnehmerstation zudem eine Kommunikationssteuereinrichtung zum Erstellen oder Lesen einer Nachricht für eine oder von einer weiteren Teilnehmerstation des Bussystems aufweist. Hierbei kann die Erfassungseinheit und/oder die Regeleinheit Teil der Kommunikationssteuereinrichtung oder Teil der Sende-/Empfangseinrichtung sein, und der Regeleinheit kann eine Sendesignal-Verzögerungseinheit nachgeschaltet ist, die Teil der Kommunikationssteuereinrichtung oder Teil der Sende-/Empfangseinrichtung ist.

Die zuvor beschriebene Teilnehmerstation kann Teil eines LIN-Bussystems sein, das einen Bus, und mindestens zwei Teilnehmerstationen aufweist, welche über den Bus derart miteinander verbunden sind, dass sie miteinander kommunizieren können. Hierbei kann eine erste Teilnehmerstation als Master und mindestens eine zweite Teilnehmerstation als Slave fungieren. Zudem ist die erste Teilnehmerstation und die mindestens eine zweite Teilnehmerstation eine zuvor beschriebene Teilnehmerstation.

Die zuvor genannte Aufgabe wird zudem durch ein Verfahren zum Regeln eines Timings eines Sendesignals für ein Bussystem mit den Merkmalen des Anspruchs 10 gelöst.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Blockschaltbild einer Sende-/Empfangseinrichtung des Bussystems gemäß dem ersten Ausführungsbeispiel;
Fig. 3 ein weiter vereinfachtes Blockschaltbild der Sende-/Empfangseinrichtung des Bussystems gemäß dem ersten Ausführungsbeispiel;
Fig. 4 bis Fig. 7 Zeitverlaufsdiagramme eines Sendesignals TX, einer Spannung VSUP, und eines Empfangssignals RX an der ersten und zweiten Teilnehmerstation des Bussystems gemäß dem ersten Ausführungsbeispiel;
Fig. 8 ein Zeitverlaufsdiagramm eines Teils einer Nachricht einer Teilnehmerstation des Bussystems gemäß einem zweiten Ausführungsbeispiel; und
Fig. 9 ein Blockschaltbild einer Teilnehmerstation des Bussystems gemäß einem dritten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

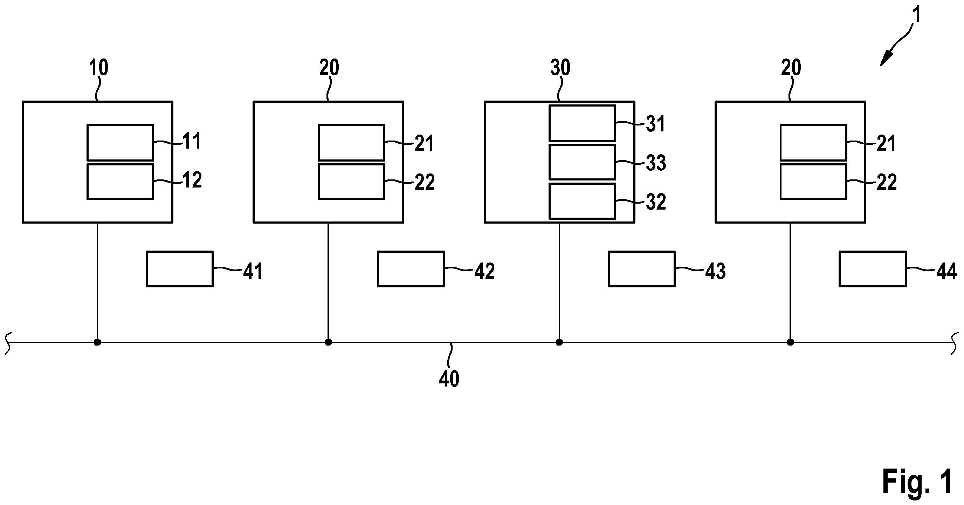

Fig. 1 zeigt ein Bussystem 1, das beispielsweise ein LIN-Bussystem sein kann. Das Bussystem 1 kann in einem Fahrzeug, insbesondere einem Kraftfahrzeug, einem Flugzeug, usw., oder im Krankenhaus usw. Verwendung finden. Insbesondere kann das Bussystem 1 bei Ausführung als LIN-Bussystem zur Kommunikation zwischen elektrischen Komponenten, wie Sensoren, Aktoren, usw., eines Fahrzeugsitzes oder einer Fahrzeugtür zu Einsatz kommen.

In Fig. 1 hat das Bussystem 1 eine Vielzahl von Teilnehmerstationen 10, 20, 30, die jeweils an einen Bus 40 angeschlossen sind. Über den Bus 40 können Nachrichten 41, 42, 43 in der Form von Signalen zwischen den einzelnen Teilnehmerstationen 10, 20, 30 übertragen werden. Im Fall eines LIN-Bussystems als Bussystem 1 kann die Teilnehmerstation 10 ein LIN-Master sein, wohingegen die Teilnehmerstationen 20, 30 jeweils LIN-Slaves bilden, welche dem LIN-Master steuerungsmäßig untergeordnet sind.

Wie in Fig. 1 gezeigt, hat die Teilnehmerstationen 10 eine Kommunikationssteuereinrichtung 11 und eine Sende-/Empfangseinrichtung 12. Die Teilnehmerstationen 20 haben jeweils eine Kommunikationssteuereinrichtung 21 und eine Sende-/Empfangseinrichtung 22. Die Teilnehmerstation 30 hat dagegen eine Kommunikationssteuereinrichtung 31, eine Sende-/Empfangseinrichtung 32 und eine Sendesignal-Verzögerungseinheit 33. Die Sende-/Empfangseinrichtung 12 der Teilnehmerstation 10, die Sende-/Empfangseinrichtungen 22 der Teilnehmerstationen 20 und die Sende-/Empfangseinrichtung 32 der Teilnehmerstation 30 sind jeweils direkt an den Bus 40 angeschlossen, auch wenn dies in Fig. 1 nicht dargestellt ist.

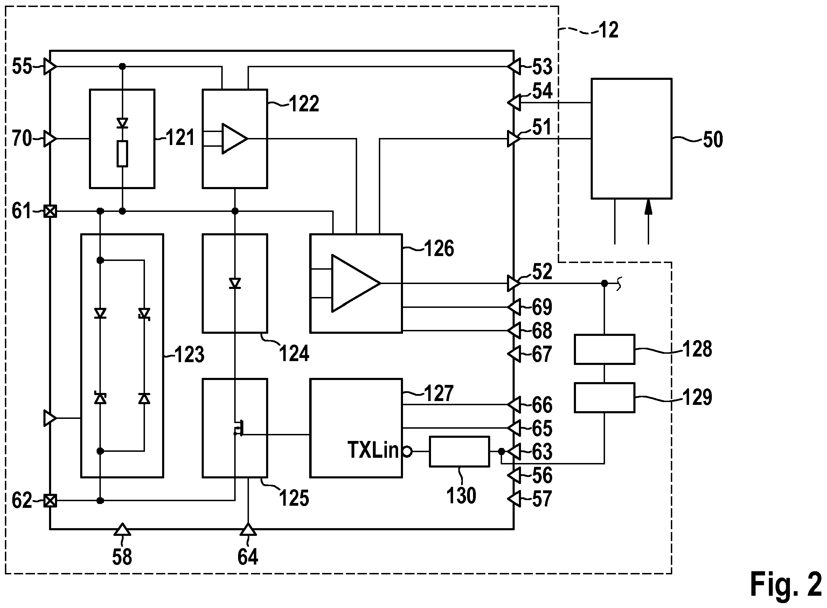

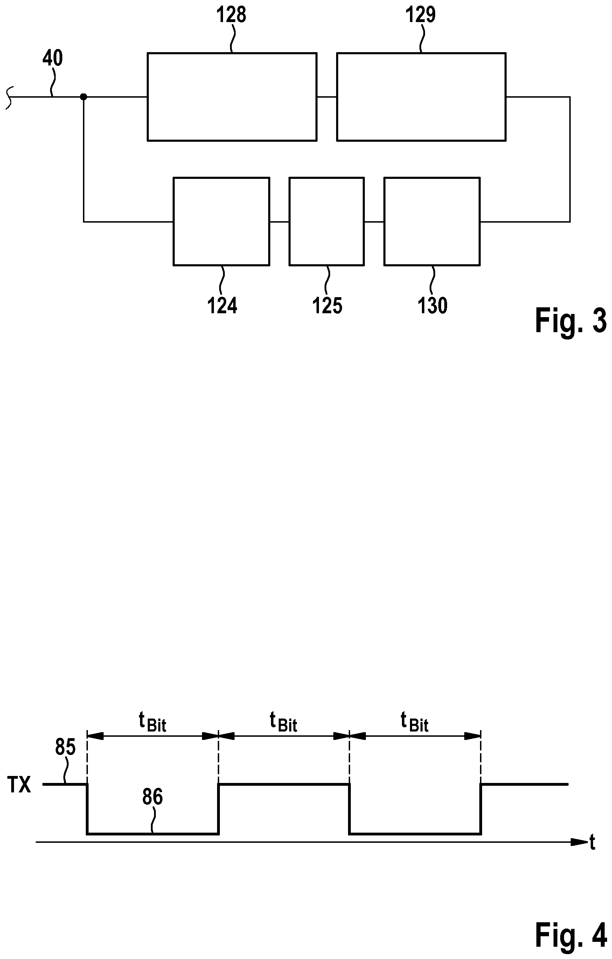

Die Kommunikationssteuereinrichtung 11 dient zur Steuerung einer Kommunikation der Teilnehmerstation 10 über den Bus 40 mit einer oder mehreren anderen der Teilnehmerstationen 20, 30. Die Sende-/Empfangseinrichtung 12 dient zum Senden einer Nachricht 41 in Form von Signalen und zum Regeln eines Timings eines Sendesignals TX (vgl. Fig. 4) für das Bussystem 1, um die Anforderungen in Bezug auf das Tastverhältnis (duty cycle) zu erfüllen, wie später in Bezug auf Fig. 2 bis Fig. 7 noch ausführlicher beschrieben. Die Kommunikationssteuereinrichtung 11 kann wie ein herkömmlicher LIN-Controller für einen LIN-Master ausgeführt sein.

Die Kommunikationssteuereinrichtung 21 dient zur Steuerung einer Kommunikation einer Teilnehmerstation 20 über den Bus 40 mit der Teilnehmerstation 10. Die Sende-/Empfangseinrichtung 22 dient zum Senden einer Nachricht 42 oder 44 in Form von Signalen an die oder Empfangen einer Nachricht 41 in Form von Signalen von der Teilnehmerstation 10. Zudem dient die Sende-/Empfangseinrichtung 22 zum Regeln des Timings des Sendesignals TX (vgl. Fig. 4) für das Bussystem 1, um die Anforderungen in Bezug auf das Tastverhältnis (duty cycle) zu erfüllen, wie zuvor bereits erwähnt und später noch ausführlicher beschrieben. Die Kommunikationssteuereinrichtung 21 kann wie ein herkömmlicher LIN-Controller für einen LIN-Slave ausgeführt sein.

Die Kommunikationssteuereinrichtung 31 dient zur Steuerung einer Kommunikation der Teilnehmerstation 30 über den Bus 40 mit der Teilnehmerstation 10. Die Sende-/Empfangseinrichtung 32 dient zum Senden einer Nachricht 43 an die oder Empfangen einer Nachricht 41 von der Teilnehmerstation 10. Die Sende-/Empfangseinrichtung 32 kann wie ein herkömmlicher LIN-Transceiver für einen LIN-Slave ausgeführt sein. Die Sendesignal-Verzögerungseinheit 33 dient zum Regeln des Timings des Sendesignals TX für das Bussystem 1, um die Anforderungen in Bezug auf das Tastverhältnis (duty cycle) zu erfüllen, wie zuvor bereits erwähnt und später noch ausführlicher beschrieben.

Fig. 2 zeigt die Sende-/Empfangseinrichtung 12 genauer. Die Sende-/Empfangseinrichtungen 22 sind jeweils auf die gleiche Weise aufgebaut wie die Sende-/Empfangseinrichtung 12, so dass auch für die Sende-/Empfangseinrichtungen 22 auf die nachfolgende Beschreibung der Sende-/Empfangseinrichtung 12 verwiesen wird.

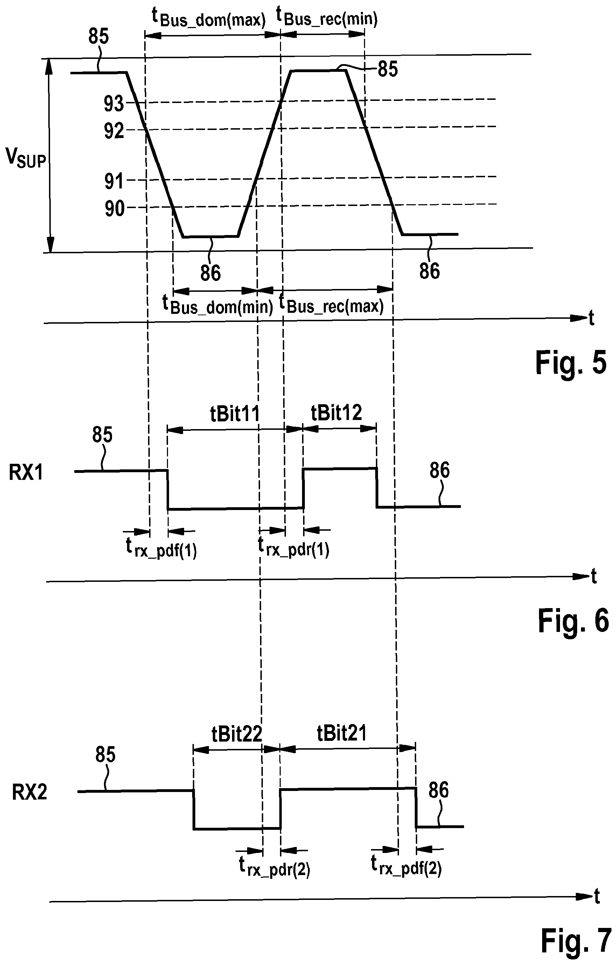

Gemäß Fig. 2 hat die Sende-/Empfangseinrichtung 12 eine Pull-Up-Einheit 121, eine Wake-Up-Einheit 122, eine ESD-Schutzeinheit 123, eine als LIN-Diode ausführbare Verpoldiode 124, einen LIN-Treiber 125, eine LIN-Empfangseinheit 126, eine LIN-Flankensteuereinheit 127, eine Erfassungseinheit 128, eine Regeleinheit 129 und eine TX-Verzögerungseinheit oder Sendesignal-Verzögerungseinheit 130. Die Einheiten 121 bis 127 haben dieselben Funktionen wie entsprechende Einheiten 121 bis 127 eines herkömmlichen LIN-Transceivers. Die Sende-/Empfangseinrichtung 12 wird bei entsprechender Ansteuerung über Anschlüsse 51, 52 von der Wake-Up-Einheit 122 und der LIN-Empfangseinheit 126 von einer Spannungsquelle 50 mit Hilfe der Anschlüsse 53 bis 55 mit Spannung versorgt, um Signale vom Bus 40 zu empfangen, oder in einen sogenannten Schlafzustand versetzt. An dem Anschluss 52, dem Ausgang der als Empfangskomparator ausgeführten LIN-Empfangseinheit 126, wird ein vom Bus 40 empfangenes Signal RXLin oder Empfangssignal RX, RX1, RX2 (vgl. Fig. 6 und Fig. 7) an die Kommunikationssteuereinrichtung 11 weitergegeben. Zudem verfügt die Sende-/Empfangseinrichtung 12 über weitere Versorgungsanschlüsse 56 bis 58, die wie die Anschlüsse 51 bis 55, gleich den Anschlüssen eines herkömmlichen LIN-Transceivers sind und daher hier nicht weiter erläutert sind.

An einem Anschluss 61 (LINBus) ist die Sende-/Empfangseinrichtung 12 an den Bus 40 angeschlossen. An einem Anschluss 62 (LinGND) ist die Sende-/Empfangseinrichtung 12 an die Masse des Busses 40 angeschlossen. An einem Eingang 63 wird ein Sendesignal TX (vgl. Fig. 4) von der Kommunikationssteuereinrichtung 11 in die Sende-/Empfangseinrichtung 12 eingespeist. Über den Eingang 64 kann das Signal TX_{AUS} (TX_{OFF}) eingespeist werden. Die anderen Eingänge 65 bis 70 sind gleich den herkömmlichen Eingängen und sind daher hier nicht näher erläutert.

Fig. 3 zeigt die Anordnung der Erfassungseinheit 128, der Regeleinheit 129 und der Sendesignal-Verzögerungseinheit 130 in einem Regeldiagramm gemäß dem ersten Ausführungsbeispiel. Die Sendesignal-Verzögerungseinheit 33 der Teilnehmerstation 30 umfasst ebenfalls eine Erfassungseinheit 128, eine Regeleinheit 129 und eine Sendesignal-Verzögerungseinheit 130. Dadurch weist auch die Sendesignal-Verzögerungseinheit 33 der Teilnehmerstation 30 die nachfolgend beschriebenen Funktionen der Erfassungseinheit 128, der Regeleinheit 129 und der Sendesignal-Verzögerungseinheit 130 auf.

Gemäß Fig. 3 ist die Erfassungseinheit 128 an den Bus 40 angeschlossen. Der Erfassungseinheit 128 ist die Regeleinheit 129 nachgeschaltet. Der Regeleinheit 129 und somit auch der Erfassungseinheit 128 ist die Sendesignal-Verzögerungseinheit 130 nachgeschaltet. Der Sendesignal-Verzögerungseinheit 130 ist der LIN-Treiber 125 nachgeschaltet. Dem LIN-Treiber 125 ist die Verpoldiode 124 nachgeschaltet. Aufgrund des nachfolgend beschriebenen Verfahrens, das durch die Erfassungseinheit 128, die Regeleinheit 129 und die Sendesignal-Verzögerungseinheit 130 ausgeführt wird, werden die in Fig. 4 bis Fig. 7 gezeigten Anforderungen gemäß der LIN-Busspezifikation erfüllt.

Hierbei zeigt Fig. 4 den Verlauf des Sendesignals TX über der Zeit t, wie es an der sendenden Teilnehmerstation 10 von der Kommunikationssteuereinrichtung 11 am Eingang 63 der Sende-/Empfangseinrichtung 12 eingegeben wird. Das Sendesignal TX ist ein Rechtecksignal mit einem rezessiven Pegel 85 und einem dominanten Pegel 86. Das Sendesignal TX hat für jedes Bit die gleiche Bitbreite tBit.

Fig. 5 zeigt den aus dem Sendesignal TX von Fig. 4 resultierenden Verlauf eines Signals auf dem Bus 40 über der Zeit t. Das Signal hat eine Amplitude VSUP der Versorgungsspannung von der Spannungsquelle 50 für die Sende-/Empfangseinrichtung 12. Das Signal hält die in Fig. 5 angegebenen Schwellwerte 90, 91 für Empfangsschwellwerte an der zweiten Teilnehmerstation 30 und Schwellwerte 92, 93 für Empfangsschwellwerte an der ersten Teilnehmerstation 20 ein. Der Schwellwert 90 entspricht dem minimalen Wert des dominanten Pegels 86 an der zweiten Teilnehmerstation 30. Der Schwellwert 91 entspricht dem minimalen Wert des rezessiven Pegels 85 an der zweiten Teilnehmerstation 30. Der Schwellwert 92 entspricht dem maximalen Wert des dominanten Pegels 86 an der ersten Teilnehmerstation 20. Der Schwellwert 93 entspricht dem maximalen Wert des rezessiven Pegels 85 an der ersten Teilnehmerstation 20.

Zudem erfüllt das in Fig. 5 gezeigte Signal die zulässigen Bitbreiten. Hierbei entspricht die Bitbreite tBus_dom(max) des Signals der maximalen Bitbreite des dominanten Pegels 86 des Signals auf dem Bus 40. Die Bitbreite tBus_dom(min) entspricht der minimalen Bitbreite des dominanten Pegels 86 des Signals auf dem Bus 40. Die Bitbreite tBus_rec(max) entspricht der maximalen Bitbreite des rezessiven Pegels 85 des Signals auf dem Bus 40. Die Bitbreite tBus_rec(min) entspricht der minimalen Bitbreite des rezessiven Pegels 85 des Signals auf dem Bus 40.

Fig. 6 zeigt über der Zeit t das Empfangssignal RX1, das sich in Folge des Sendesignals TX an der ersten Teilnehmerstation 20 einstellt. Das Empfangssignal RX1 hat eine Bitbreite tBit11 für dominante Bits und eine Bitbreite tBit12 für rezessive Bits. Die fallende Flanke des Empfangssignals RX1 ist um eine Verzögerungszeit trx_pdf(1) gegenüber dem Signal auf dem Bus 40 gemäß Fig. 5 verzögert, wie durch die gestrichelten Linien in Fig. 5 und Fig. 6 veranschaulicht. Die steigende Flanke des Empfangssignals RX1 ist um eine Verzögerungszeit trx_pdr(1) gegenüber dem Signal auf dem Bus 40 gemäß Fig. 5 verzögert, wie durch die gestrichelten Linien in Fig. 5 und Fig. 6 veranschaulicht.

Fig. 7 zeigt über der Zeit t das Empfangssignal RX2, das sich in Folge des Sendesignals TX an der zweiten Teilnehmerstation 30 einstellt. Das Empfangssignal RX2 hat eine Bitbreite tBit21 für dominante Bits und eine Bitbreite tBit22 für rezessive Bits. Die fallende Flanke des Empfangssignals RX2 ist um eine Verzögerungszeit trx_pdf(2) gegenüber dem Signal auf dem Bus 40 gemäß Fig. 5 verzögert, wie durch die gestrichelten Linien in Fig. 5 bis Fig. 7 veranschaulicht. Die steigende Flanke des Empfangssignals RX2 ist um eine Verzögerungszeit trx_pdr(2) gegenüber dem Signal auf dem Bus 40 gemäß Fig. 5 verzögert, wie durch die gestrichelten Linien in Fig. 5 bis Fig. 7 veranschaulicht.

Die folgenden Einflussgrößen wirken sich für die Teilnehmerstation 10 als sendende Teilnehmerstation auf die Timing-Anforderungen des Tastverhältnisses (Duty-Cycle) aus:
- die Symmetrie der Ausbreitungsverzögerungszeit (Propagation delay time symmetry) der sendenden Teilnehmerstation, und
- die Flankensteilheit für steigende und fallende Flanke des Bussignals .

Hierbei gilt, dass die Ausbreitungsverzögerungszeit gleich der Zeit ist, die zwischen einem Zeitpunkt eines Vorliegens einer Flanke am Sendesignal TX bis zu dem Zeitpunkt vergeht, zu welchem die Flanke am Empfangssignal RX erkannt wird. Die Symmetrie der Ausbreitungsverzögerungszeit der sendenden Teilnehmerstation (Prop delay time symmetry) berechnet sich dann aus der Subtraktion der Ausbreitungsverzögerungszeit des Übergangs von dem dominanten zum rezessiven Zustand des Bussignals (prop delay time dom to rez) und der Ausbreitungsverzögerungszeit des Übergangs von dem rezessiven zum dominanten Zustand des Bussignals (prop delay time rez to dom). Dies kann auch kurz als Prop delay time symmetry = prop delay time dom to rez - prop delay time rez to dom angegeben werden.

Die Erfassungseinheit 128 erfasst, während die Sende-/Empfangseinrichtung 12 sendet, die Bitbreite tBit1 bzw. tBit2 an dem Anschluss 52, die sich aufgrund des Sendesignals TX von Fig. 4 einstellt. Somit erfasst die Erfassungseinheit 128 im Normalbetrieb der Sende-/Empfangseinrichtung 12 die Bitbreite tBit1 bzw. tBit2 der vom Bus 40 empfangenen Nachricht 41. Vorzugsweise werden von der Erfassungseinheit 128 die Bitbreite tBit11, tBit12 oder tBit21, tBit22 sowohl für dominante als auch für rezessive Bits des Empfangssignals RX, RX1, RX2 erfasst, wobei die Regeleinheit 129 auf dieser Grundlage die Flanken des Sendesignals TX gezielt verzögert, wie nachfolgend beschrieben.

Hierfür ermittelt die Regeleinheit 129 zunächst die Bitbreite für das Sendesignal TX einer neu zu sendenden Nachricht 41 auf der Grundlage der Bitbreite einer zuvor gesendeten und dann als Empfangssignal RX, RX1, RX2 empfangenen Nachricht 41. Die erfassten Bitbreiten werden mit den maximalen und minimalen Bitbreiten tBus_dom(max), tBus_dom(min), tBus_rec(max), tBus_rec(min) für das Signal auf dem Bus 40. Dadurch ermittelt die Regeleinheit 129, inwiefern die Flanken des Sendesignals TX zu verzögern sind, um die Anforderungen an das Tastverhältnis (duty cycle) zu erfüllen. Hierbei werden die Flanken des Sendesignals TX derart verzögert, dass die in Fig. 5 angegebenen Schwellwerte 91 bis 93 und die maximalen und minimalen Bitbreiten tBus_dom(max), tBus_dom(min), tBus_rec(max), tBus_rec(min) für das Signal auf dem Bus 40 eingehalten werden.

Der ermittelte Wert für die Flanken des Sendesignals TX wird von der Regeleinheit 129 an die Sendesignal-Verzögerungseinheit 130 weitergegeben, welche die Flanken des Sendesignals TX verzögert und zwar mit dem von der Regeleinheit 129 ermittelten und dann vorgegebenen Verzögerungswert. Der Verzögerungswert beträgt Bruchteile einer minimalen Bitzeit entsprechend der Bitbreite tBit, tBit1, tBit2. Der Verzögerungswert kann in mehrere zeitliche Größen unterteilt sein, welche einstellbar oder regelbar sind. Zusätzlich oder alternativ können die Abstufungen des Verzögerungswerts proportional zur Bitrate ausgeführt sein, die das Verhältnis einer Datenmenge zu einer Zeit, beispielsweise von Bits pro Sekunde, ist.

Somit führen die Erfassungseinheit 128, die Regeleinheit 129 und die Sendesignal-Verzögerungseinheit 130 ein Verfahren zum Regeln eines Timings von Flanken des Sendesignals TX für das Bussystem 1 aus. Hierbei wird in einem ersten Schritt, mit der Erfassungseinheit 128 die Bitbreite tBit1 oder tBit2 von empfangenen Bits des Empfangssignals RX erfasst. Hierbei entspricht das Empfangssignal RX vorzugsweise dem zuvor von der Teilnehmerstation 10 auf den Bus 40 gesendeten Sendesignal TX für die Nachricht 41. In einem darauffolgenden Schritt ermittelt die Regeleinheit 129 die Bitbreite tBit von Bits des Sendesignals TX für die Nachricht 41, um die Bussystem-Anforderungen an das Tastverhältnis zu erfüllen. Danach regelt die Regeleinheit 129 das Sendesignal TX einer weiteren zu sendenden Nachricht 41 durch Verzögerung der Flanken des der Nachricht entsprechenden Sendesignals TX auf der Grundlage der von der Erfassungseinheit erfassten Bitbreite tBit1 oder tBit2.

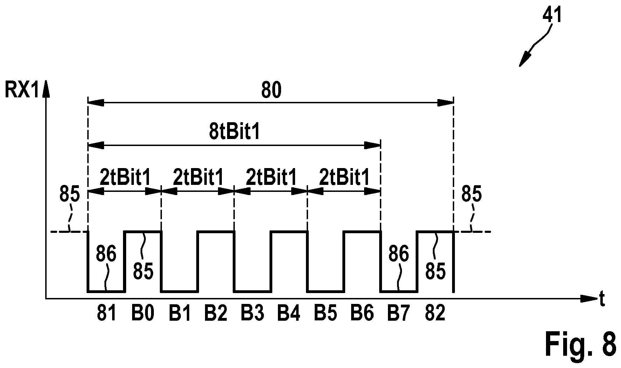

Fig. 8 zeigt in Bezug auf ein zweites Ausführungsbeispiel für das Empfangssignal RXD1 ein Feld 80 als einen Teil der am Ausgang 52 empfangenen Nachricht 41. Die Nachrichten 42, 43, 44 haben ein gleiches Feld 80. Das dargestellte Feld 80 der Nachricht 41 hat ein Startbit 81 und ein Stoppbit 82. Dazwischen sind die Bits B0 bis B8 angeordnet.

Im Feld 80 wechseln die direkt aufeinanderfolgenden Bits jeweils vom einen auf den anderen Zustand. Demzufolge wechselt das Bit B0 von dem dargestellten rezessiven Pegel 85 zum Bit B1 in den dominanten Pegel 86, das Bit B2 hat wieder den rezessiven Pegel 85, usw. Das Feld 80 kann bei dem LIN-Bussystem das Synchronisationsfeld (Syncfield) sein.

Gemäß dem vorliegenden Ausführungsbeispiel führt die Erfassungseinheit 128 ihre Erfassung der Bitbreite tBit für dominante und rezessive Bits während des Felds 80 aus. Da in dem Feld 80 sichergestellt ist, dass 8 Bits mit dauerndem Zustandswechsel gesendet werden, wie in Fig. 8 gezeigt, kann die Bitbreite tBit sehr zuverlässig erfasst werden.

Die Regeleinheit 129 kann den Wert für die Verzögerung der Flanken der zu sendenden Nachricht 41 solange beibehalten, bis in einer empfangenen Nachricht das nächste Synchronisationsfeld ansteht.

Ansonsten ist das vorliegende Ausführungsbeispiel auf die gleiche Weise ausgeführt, wie zuvor für das erste Ausführungsbeispiel beschrieben.

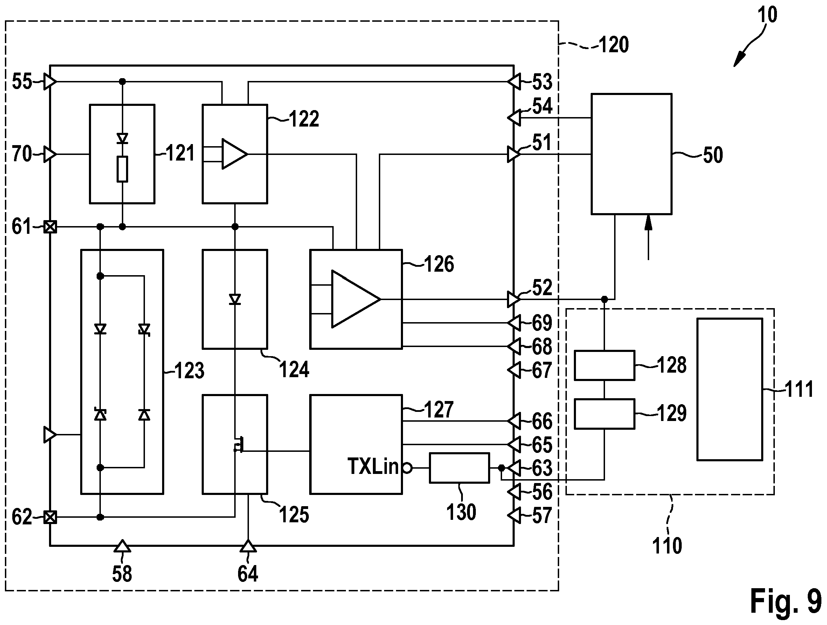

Fig. 9 zeigt eine Teilnehmerstation 10 gemäß einem dritten Ausführungsbeispiel. Hier sind die Erfassungseinheit 128 und die Regeleinheit 129 Teil einer Kommunikationssteuereinrichtung 110. Die Kommunikationssteuereinrichtung 110 hat zudem eine Einheit 111, welche die Funktionen einer herkömmlichen LIN-Kommunikationssteuereinrichtung, also einer Kommunikationssteuereinrichtung 11 aufweist. Die Sendesignal-Verzögerungseinheit 130 ist dagegen Teil einer Sende-/Empfangseinrichtung 120. Ansonsten ist die Teilnehmerstation 10 gemäß dem dritten Ausführungsbeispiel aufgebaut wie die Teilnehmerstation 10 gemäß dem ersten und/oder zweiten Ausführungsbeispiel.

Gemäß einer Modifikation des dritten Ausführungsbeispiels ist auch die Sendesignal-Verzögerungseinheit 130 Teil der Kommunikationssteuereinrichtung 110.

Gemäß einer weiteren Modifikation des dritten Ausführungsbeispiels ist nur die Erfassungseinheit 128 Teil der Kommunikationssteuereinrichtung 110.

Alle zuvor beschriebenen Ausgestaltungen des Bussystems 1 der Teilnehmerstationen 10, 20, 30 und des Verfahrens gemäß dem ersten bis dritten Ausführungsbeispiel und deren Modifikationen können einzeln oder in allen möglichen Kombinationen Verwendung finden. Zusätzlich sind insbesondere folgende Modifikationen denkbar.

Das zuvor beschriebene Bussystem 1 gemäß dem ersten und zweiten Ausführungsbeispiel ist anhand eines auf dem LIN-Protokoll basierenden Bussystems beschrieben.

Wie zuvor beschrieben, lässt sich die Funktionalität der zuvor beschriebenen Ausführungsbeispiele in einem Transceiver bzw. einer Sende-/Empfangseinrichtung 12 oder einem LIN-Transceiver oder einem Transceiver-Chipsatz oder einem LIN-Transceiver-Chipsatz oder auch in der Kommunikationssteuereinrichtung 11, usw. umsetzen. Zusätzlich oder alternativ kann es in existierende Produkte integriert werden. Insbesondere ist es möglich, dass die betrachtete Funktionalität entweder im Transceiver als separater elektronischer Baustein (Chip) realisiert oder in einer integrierten Gesamtlösung, bei welchem nur ein elektronischer Baustein (Chip) vorhanden ist, eingebettet ist.

Nach dazu ist es möglich, dass die Teilnehmerstationen 10, 20, 30 und des Verfahrens gemäß dem ersten bis dritten Ausführungsbeispiel und deren Modifikationen zusätzlich ergänzt sind durch ein Verfahren zum Regeln eines Sendesignals für ein Bussystem, mit welchen die Emission reduziert wird und trotzdem die Timing-Anforderungen des Bussystems erfüllt werden können. Hierbei können die Teilnehmerstationen 10, 20, 30 ein Verfahren zum Regeln eines Sendesignals für ein Bussystem ausführen, welches die Schritte umfasst: Erfassen, mit einer Erfassungseinheit, eines Maßes für eine Emission/Abstrahlung durch Schaltvorgänge aufgrund einer im Bussystem gesendeten Nachricht, Erfassen, mit einer zweiten Erfassungseinheit, einer Flankensteilheit einer im Bussystem gesendeten Nachricht, und Regeln, mit einer Regeleinheit, der Flankensteilheit und/oder einer Flankenform der im Bussystem gesendeten Nachricht auf der Grundlage eines Erfassungsergebnisses der ersten Erfassungseinheit und eines Erfassungsergebnisses der zweiten Erfassungseinheit, um Störungen durch Schaltvorgänge aufgrund einer im Bussystem gesendeten Nachricht zu minimieren und die Anforderungen des Bussystems an ein Timing der Nachricht zu erfüllen. Dieses Verfahren ist in einer weiteren Anmeldung der Anmelderin der vorliegenden Erfindung näher beschrieben.

## Patentansprüche

1. Teilnehmerstation (10) für ein Bussystem (1), mit
einer Erfassungseinheit (128) zur Erfassung einer Bitbreite (tBit1; tBit11, tBit12; tBit21, tBit22) von empfangenen Bits (81, 82, B1 bis B7) einer über einen Bus (40) des Bussystems (1) gesendeten Nachricht (41), und
einer Regeleinheit (129), die ausgestaltet ist zur Ermittlung der Bitbreite (tBit) von mindestens einem Bit einer zu sendenden Nachricht (41) auf der Grundlage einer Bitbreite einer zuvor gesendeten und dann als Empfangssignal (RX, RX1, RX2) empfangenen Nachricht (41), zur Ermittlung unter Verwendung der erfassten Bitbreite (tBit1; tBit11, tBit12; tBit21, tBit22) und von maximalen und minimalen Bitbreiten (tBus_dom(max), tBus_dom(min), tBus_rec(max), tBus_rec(min)) für das Signal auf dem Bus (40), inwiefern Flanken eines der Nachricht (41) entsprechenden Sendesignals (TX) auf der Grundlage der von der Erfassungseinheit (128) erfassten Bitbreite (tBit1; tBit11, tBit12; tBit21, tBit22) mit einem Verzögerungswert zu verzögern sind, um die Bussystem-Anforderungen an das Tastverhältnis zu erfüllen, und
zur Ausgabe des ermittelten Verzögerungswerts, um die Bitbreite (tbit) eines der zu sendenden Nachricht (41) entsprechenden Signals durch Verzögerung der Flanken des Sendesignals (TX) auf der Grundlage der von der Erfassungseinheit erfassten Bitbreite (tBit1; tBit11, tBit12; tBit21, tBit22) zu regeln.

2. Teilnehmerstation (10) nach Anspruch 1,
zudem mit einer Sende-/Empfangseinrichtung (12; 120) zum Senden und/oder Empfangen von Nachrichten (41, 42, 43, 44),
wobei die Erfassungseinheit (128) ausgestaltet ist, die Bitbreite (tBit11, tBit12; tBit21, tBit22) zu erfassen, während die Sende-/Empfangseinrichtung (12; 120) Nachrichten (41) sendet.

3. Teilnehmerstation (10) nach Anspruch 1 oder 2, wobei die Erfassungseinheit (128) zur Erfassung der Bitbreite (tBit1; tBit11, tBit12; tBit21, tBit22) von rezessiven und/oder dominanten Bits von über den Bus (40) gesendeten Nachrichten (41) ausgestaltet ist.

4. Teilnehmerstation nach einem der vorangehenden Ansprüche,
wobei die Erfassungseinheit (128) zur Erfassung der Bitbreite (tBit1) während eines Synchronisationsfelds (80) der Nachricht (41) ausgestaltet ist, und
wobei die Regeleinheit (129) zur Regelung der Bitbreite (tBit) für eine anstehende zu sendende Nachricht (41) ausgestaltet ist.

5. Teilnehmerstation (10) nach Anspruch 4,
wobei das Bussystem (1) ein Local Interconnect Network-Bussystem ist, und wobei die Regeleinheit (129) den Wert für die Verzögerung der Flanken der zu sendenden Nachricht (41) solange beibehält, bis in einer empfangenen Nachricht (41) das nächste Synchronisationsfeld (80) ansteht.

6. Teilnehmerstation (10) nach einem der Ansprüche 1 bis 4, wobei die Teilnehmerstation (10) zum Senden und/oder Empfangen von Nachrichten (41) gemäß dem Local Interconnect Network-Standard ausgestaltet ist.

7. Teilnehmerstation (10) nach einem der vorangehenden Ansprüche, zudem mit einer Kommunikationssteuereinrichtung (11; 110) zum Erstellen oder Lesen einer Nachricht (41) für eine oder von einer weiteren Teilnehmerstation (20, 30) des Bussystems (1).

8. Teilnehmerstation (10) nach Anspruch 7,
wobei die Erfassungseinheit (128) und/oder die Regeleinheit (129) Teil der Kommunikationssteuereinrichtung (11; 110) oder Teil der Sende-/Empfangseinrichtung (12; 120) sind, und
wobei der Regeleinheit (129) eine Sendesignal-Verzögerungseinheit (130) nachgeschaltet ist, die Teil der Kommunikationssteuereinrichtung (11; 110) oder Teil der Sende-/Empfangseinrichtung (12; 120) ist.

9. Local Interconnect Network-Bussystem (1), mit
einem Bus (40), und
einer ersten Teilnehmerstation (10) als Master und mindestens einer zweiten Teilnehmerstation (20, 30) als Slave, welche über den Bus (40) derart miteinander verbunden sind, dass sie miteinander kommunizieren können, wobei die erste Teilnehmerstation (10) und die mindestens eine zweite Teilnehmerstation (20, 30) eine Teilnehmerstation nach einem der vorangehenden Ansprüche sind.

10. Verfahren zum Regeln eines Timings eines Sendesignals (TX) für ein Bussystem (1), mit den Schritten
Erfassen, mit einer Erfassungseinheit (128), einer Bitbreite (tBit1; tBit11, tBit12; tBit21, tBit22) von empfangenen Bits einer über einem Bus (40) des Bussystems (1) gesendeten Nachricht (41),
Ermitteln, mit einer Regeleinheit (129), der Bitbreite (tBit) von mindestens einem Bit einer zu sendenden Nachricht (41) auf der Grundlage einer Bitbreite einer zuvor gesendeten und dann als Empfangssignal (RX, RX1, RX2) empfangenen Nachricht (41),
Ermitteln, mit der Regeleinheit (129), unter Verwendung der erfassten Bitbreite (tBit1; tBit11, tBit12; tBit21, tBit22) und von maximalen und minimalen Bitbreiten (tBus_dom(max), tBus_dom(min), tBus_rec(max), tBus_rec(min)) für das Signal auf dem Bus (40), inwiefern Flanken eines der Nachricht (41) entsprechenden Sendesignals (TX) auf der Grundlage der von der Erfassungseinheit (128) erfassten Bitbreite (tBit1; tBit11, tBit12; tBit21, tBit22) mit einem Verzögerungswert zu verzögern sind, um die Bussystem-Anforderungen an das Tastverhältnis zu erfüllen, und
Ausgeben, mit der Regeleinheit (129), des ermittelten Verzögerungswerts, um die Bitbreite (tBit) eines der zu sendenden Nachricht (41) entsprechenden Signals durch Verzögerung der Flanken des der Nachricht (41) entsprechenden Sendesignals (TX) auf der Grundlage der von der Erfassungseinheit erfassten Bitbreite (tBit1; tBit11, tBit12; tBit21, tBit22) zu regeln.

## Claims

1. Subscriber station (10) for a bus system (1), having
a detection unit (128) for detecting a bit width (tBit1; tBit11, tBit12; tBit21, tBit22) of received bits (81, 82, B1 to B7) of a message (41) sent via a bus (40) of the bus system (1), and
a control unit (129) designed
to ascertain the bit width (tBit) of at least one bit of a message (41) to be sent on the basis of a bit width of a message (41) previously sent and then received as received signal (RX, RX1, RX2),
to use the detected bit width (tBit1; tBit11, tBit12; tBit21, tBit22) and maximum and minimum bit widths (tBus_dom(max), tBus_dom(min), tBus_rec(max), tBus_rec(min)) for the signal on the bus (40) to ascertain the extent to which edges of a transmission signal (TX) corresponding to the message (41) need to be delayed by a delay value on the basis of the bit width (tBit1; tBit11, tBit12; tBit21, tBit22) detected by the detection unit (128) in order to meet the bus system requirements on the duty ratio, and
to output the ascertained delay value in order to adjust the bit width (tBit) of a signal corresponding to the message (41) to be sent by delaying the edges of the transmission signal (TX) on the basis of the bit width (tBit1; tBit11, tBit12; tBit21, tBit22) detected by the detection unit.

2. Subscriber station (10) according to Claim 1, moreover having a transmission/reception device (12; 120) for sending and/or receiving messages (41, 42, 43, 44),
wherein the detection unit (128) is designed to detect the bit width (tBit11, tBit12; tBit21, tBit22) while the transmission/reception device (12; 120) sends messages (41).

3. Subscriber station (10) according to Claim 1 or 2, wherein the detection unit (128) is designed to detect the bit width (tBit1; tBit11, tBit12; tBit21, tBit22) of recessive and/or dominant bits of messages (41) sent via the bus (40).

4. Subscriber station according to one of the preceding claims,
wherein the detection unit (128) is designed to detect the bit width (tBit1) during a synchronization field (80) of the message (41), and
wherein the control unit (129) is designed to adjust the bit width (tBit) for a queueing message (41) that is to be sent.

5. Subscriber station (10) according to Claim 4,
wherein the bus system (1) is a Local Interconnect Network bus system, and
wherein the control unit (129) retains the value for delaying the edges of the message (41) to be sent until the next synchronization field (80) in a received message (41) is queueing.

6. Subscriber station (10) according to one of Claims 1 to 4, wherein the subscriber station (10) is designed to send and/or receive messages (41) in accordance with the Local Interconnect Network standard.

7. Subscriber station (10) according to one of the preceding claims, moreover having a communication control device (11; 110) for creating or reading a message (41) for or from a further subscriber station (20, 30) of the bus system (1).

8. Subscriber station (10) according to Claim 7,
wherein the detection unit (128) and/or the control unit (129) are part of the communication control device (11; 110) or part of the transmission/reception device (12; 120), and
wherein the control unit (129) has a transmission signal delay unit (130) connected downstream of it that is part of the communication control device (11; 110) or part of the transmission/reception device (12; 120).

9. Local Interconnect Network bus system (1), having a bus (40) and
a first subscriber station (10) as master and at least one second subscriber station (20, 30) as slave, which are connected to one another via the bus (40) such that they can communicate with one another,
wherein the first subscriber station (10) and the at least one second subscriber station (20, 30) are a subscriber station according to one of the preceding claims.

10. Method for adjusting a timing of a transmission signal (TX) for a bus system (1), having the steps of detecting, by means of a detection unit (128), a bit width (tBit1; tBit11, tBit12; tBit21, tBit22) of received bits of a message (41) sent via a bus (40) of the bus system (1),
ascertaining, by means of a control unit (129), the bit width (tBit) of at least one bit of a message (41) to be sent on the basis of a bit width of a message (41) previously sent and then received as received signal (RX, RX1, RX2),
using the detected bit width (tBit1; tBit11, tBit12; tBit21, tBit22) and maximum and minimum bit widths (tBus_dom(max), tBus_dom(min), tBus_rec(max), tBus_rec(min)) for the signal on the bus (40) to ascertain, by means of the control unit (129), the extent to which edges of a transmission signal (TX) corresponding to the message (41) need to be delayed by a delay value on the basis of the bit width (tBit1; tBit11, tBit12; tBit21, tBit22) detected by the detection unit (128) in order to meet the bus system requirements on the duty ratio, and
outputting, by means of the control unit (129), the ascertained delay value in order to adjust the bit width (tBit) of a signal corresponding to the message (41) to be sent by delaying the edges of the transmission signal (TX) corresponding to the message (41) on the basis of the bit width (tBit1; tBit11, tBit12; tBit21, tBit22) detected by the detection unit.

## Revendications

1. Station périphérique (10) destinée à un système de bus (1), ladite station périphérique comprenant
une unité de détection (128) destinée à détecter une largeur de bit (tBit1 ; tBit11, tBit12 ; tBit21, tBit22) de bits reçus (81, 82, B1 à B7) d'un message (41) envoyé sur un bus (40) du système de bus (1), et une unité de réglage (129) qui est conçue pour déterminer la largeur de bit (tBit) d'au moins un bit d'un message (41) à envoyer sur la base d'une largeur de bit d'un message (41) précédemment envoyé puis reçu comme signal de réception (RX, RX1, RX2), pour déterminer à l'aide de la largeur de bit détectée (tBit1 ; tBit11, tBit12 ; tBit21, tBit22) et de largeurs de bit maximale et minimale (tBus_dom(max), tBus_dom(min), tBus_rec(max), tBus_rec(min)) pour le signal sur le bus (40), dans quelle mesure des flancs d'un signal d'émission (TX), correspondant au message (41), doivent être retardés avec une valeur de retard sur la base de la largeur de bit (tBit1 ; tBit11, tBit12 ; tBit21, tBit22) détectée par l'unité de détection (128) afin de répondre aux exigences du système de bus en termes de rapport cyclique, et
pour délivrer la valeur de retard déterminée afin de régler la largeur de bit (tbit) d'un signal, correspondant au message (41) à envoyer, par retardement des flancs du signal d'émission (TX) sur la base de la largeur de bit (tBit1 ; tBit11, tBit12 ; tBit21, tBit22) détectée par l'unité de détection.

2. Station périphérique (10) selon la revendication 1, comprenant en outre
un dispositif d'émission/réception (12 ; 120) destiné à envoyer et/ou recevoir des messages (41, 42, 43, 44), l'unité de détection (128) étant conçue pour détecter la largeur de bit (tBit11, tBit12 ; tBit21, tBit22) pendant que le dispositif d'émission/réception (12 ; 120) envoie des messages (41).

3. Station périphérique (10) selon la revendication 1 ou 2, l'unité de détection (128) étant conçue pour détecter la largeur de bits (tBit1 ; tBit11, tBit12 ; tBit21, tBit22) de bits récessifs et/ou dominants de messages (41) envoyés su le bus (40).

4. Station périphérique selon l'une des revendications précédentes,
l'unité de détection (128) étant conçue pour détecter la largeur de bit (tBit1) pendant un champ de synchronisation (80) du message (41), et
l'unité de réglage (129) étant conçue pour régler la largeur de bit (tbit) pour un message (41) à envoyer en attente.

5. Station périphérique (10) selon la revendication 4,
le système de bus (1) étant un système de bus de réseau interconnecté local, et
l'unité de réglage (129) conservant la valeur du retard des flancs du message (41) à envoyer jusqu'à ce que le champ de synchronisation (80) suivant soit présent dans un message (41) reçu.

6. Station périphérique (10) selon l'une des revendications 1 à 4, la station périphérique (10) étant conçue pour envoyer et/ou recevoir des messages (41) conformément à la norme de réseau interconnecté local.

7. Station périphérique (10) selon l'une quelconque des revendications précédentes, comprenant en outre un dispositif de commande de communication (11 ; 110) destiné à créer ou lire un message (41) destiné à une autre station périphérique (20, 30) du système de bus (1) ou provenant de celle-ci.

8. Station périphérique (10) selon la revendication 7,
l'unité de détection (128) et/ou l'unité de réglage (129) faisant partie du dispositif de commande de communication (11 ; 110) ou du dispositif d'émission/réception (12 ; 120), et
l'unité de réglage (129) étant suivie d'une unité de retard de signal d'émission (130) qui fait partie du dispositif de commande de communication (11 ; 110) ou du dispositif d'émission/réception (12 ; 120).

9. Système de bus de réseau interconnecté local (1), comprenant
un bus (40), et
une première station périphérique (10) comme maître et au moins une deuxième station périphérique (20, 30) comme esclave, lesquelles sont reliées entre elles par le biais du bus (40) de manière à ce qu'elles puissent communiquer entre elles,
la première station périphérique (10) et l'au moins une deuxième station périphérique (20, 30) étant une station périphérique selon l'une des revendications précédentes.

10. Procédé de réglage de la synchronisation d'un signal d'émission (TX) destiné à un système de bus (1), ledit procédé comprenant les étapes suivantes
détecter, au moyen d'une unité de détection (128), une largeur de bit (tBit1 ; tBit11, tBit12 ; tBit21, tBit22) de bits reçus d'un message (41) envoyé sur un bus (40) du système de bus (1), et
déterminer, au moyen d'une unité de réglage (129), la largeur de bit (tBit) d'au moins un bit d'un message (41) à envoyer sur la base d'une largeur de bit d'un message (41) précédemment envoyé puis reçu comme signal de réception (RX, RX1, RX2),
déterminer, au moyen d'une unité de réglage (129), à l'aide de la largeur de bit détectée (tBit1 ; tBit11, tBit12 ; tBit21, tBit22) et de largeurs de bit maximale et minimale (tBus_dom(max), tBus_dom(min), tBus_rec(max), tBus_rec(min)) pour le signal sur le bus (40), dans quelle mesure des flancs d'un signal d'émission (TX), correspondant au message (41), doivent être retardés avec une valeur de retard sur la base de la largeur de bit (tBit1 ; tBit11, tBit12 ; tBit21, tBit22) détectée par l'unité de détection (128) afin de répondre aux exigences du système de bus en termes de rapport cyclique, et
délivrer, au moyen d'une unité de réglage (129), la valeur de retard déterminée afin de régler la largeur de bit (tbit) d'un signal, correspondant au message (41) à envoyer, par retardement des flancs du signal d'émission (TX), correspondant au message (41), sur la base de la largeur de bit (tBit1 ; tBit11, tBit12 ; tBit21, tBit22) détectée par l'unité de détection.
